# EUROPÄISCHE PATENTSCHRIFT

(11) **EP 2 507 090 B1**
(45) Veröffentlichungstag und Bekanntmachung des Hinweises auf die Patenterteilung: **07.09.2016**
(21) Anmeldenummer: 10768711.3
(22) Anmeldetag: 06.10.2010
(51) Int. Cl.: B60N 2/44, B60N 2/427

(54) **HALTEVORRICHTUNG ZUM HALTEN EINES FAHRZEUGINSASSEN IN EINEM FAHRZEUGSITZ SOWIE VERFAHREN ZUM BETÄTIGEN DER HALTEVORRICHTUNG**
RETAINING DEVICE FOR RETAINING A VEHICLE OCCUPANT IN A VEHICLE SEAT, AND METHOD FOR ACTUATING THE RETAINING DEVICE
DISPOSITIF DE RETENUE POUR MAINTENIR UN PASSAGER DE VÉHICULE DANS UN SIÈGE DE VÉHICULE ET PROCÉDÉ POUR L'ACTIONNEMENT DU DISPOSITIF DE RETENUE

(30) Priorität: 02.12.2009 DE 102009047393
(43) Veröffentlichungstag der Anmeldung: 10.10.2012
(73) Patentinhaber: Robert Bosch GmbH, 70442 Stuttgart (DE)
(72) Erfinder: FREIENSTEIN, Heiko, 71263 Weil Der Stadt (DE); KOEHLER, Armin, 74343 Sachsenheim (DE); SCHRADER, Jens, 76530 Baden-Baden (DE)
(86) Internationale Anmeldenummer: PCT/EP2010/064900
(87) Internationale Veröffentlichungsnummer: WO 2011/067017

(56) Entgegenhaltungen:
- WO-A1-97/29924
- DE-A1- 19 938 698
- DE-A1-102008 029 339
- DE-A1-102008 030 383
- DE-U1- 29 815 521
- JP-A- 60 234 037
- US-A1- 2005 264 052
- US-A1- 2009 218 858

## Beschreibung

### Stand der Technik

Die vorliegende Erfindung betrifft eine Haltevorrichtung zum Halten eines Fahrzeuginsassen in einem Fahrzeugsitz nach der Gattung des Anspruchs 1 bzw. des Anspruchs 7 sowie ein Verfahren zum Betätigen der Haltevorrichtung nach Anspruch 12.

Aus der gattungsbildenden EP 1 633 606 B1 ist ein Insassenschutzsystem für Fahrzeuge bekannt, bei dem Halteelemente als Teil einer Haltevorrichtung vorgesehen sind, welche in Form von am Fahrzeugsitz seitlich ausfahrbaren Fahrzeugsitzwangen ausgebildet sind. Die Fahrzeugsitzwangen werden im Fall eines detektierten möglichen Unfalls aktiviert und treten seitlich aus dem Fahrzeugsitz mittels vorgesehener Aktuatoren aus. Es werden dabei sowohl an der Rückenlehne als auch an der Fahrzeugsitzfläche seitliche Fahrzeugsitzwangen beidseitig ausgefahren, um so eine bessere Seitenführung und damit einen besseren Schutz eines Insassen zu gewährleisten. Diese Art der Halteelemente, welche den Insassen seitlich teilweise umfassen, um ihn so auf einer entsprechenden Position auf dem Fahrzeugsitz zu halten, werden zusätzlich zu herkömmlichen Rückhaltesystemen, wie Airbags oder Rückhaltegurten bzw. Gurtstraffern, eingesetzt. Wünschenswert ist beim Einsatz von seitlichen Halteelementen, dass eine möglichst großflächige Anbindung des Insassen an die Kontur des entsprechend ausgefahrenen Halteelements erfolgt, um so die Belastungswerte auf den Insassen klein zu halten bzw. die Einleitung einer insgesamt größeren Rückhaltekraft zu ermöglichen. Bei der bekannten Haltevorrichtung mittels Halteelement an der Rückenlehne und mittels Halteelement an der Fahrzeugsitzfläche kann außerdem nur unvollkommen ein an den Insassen ausbalancierter fahrzeugsitzbasierter Seitenhalt für den Crashfall erfolgen, da die individuelle Körperbeschaffenheit bzw. individuelle biomechanische Belastbarkeit des Insassen keinen Einfluss auf die von den Halteelementen erbrachten Rückhaltekräfte hat.

Aus der DE 10 2008 029 339 A1, der DE 298 15 521 U1 und der US 2009/0218858 A1 sind Fahrzeugsitze mit Halteelementen bekannt, die in Abhängigkeit vom Fahrzeugzustand angesteuert werden.

### Offenbarung der Erfindung

Die erfindungsgemäße Haltevorrichtung zum Halten eines Fahrzeuginsassen in einem Fahrzeugsitz mit den Merkmalen des Anspruchs 1 sowie das Verfahren zum Betätigen der Haltevorrichtung nach Anspruch 11 hat demgegenüber den Vorteil, dass eine Reduzierung der Belastung des Insassen im Crash-Fall möglich ist.

Die Reduzierung der Belastung des Insassen kann gemäß Anspruch 1 durch eine möglichst großflächige Anbindung des Insassen an die Kontur des ausgefahrenen Halteelements erfolgen. Dies vermindert die Belastungswerte auf den Insassen und ermöglicht so die Einleitung einer insgesamt größeren Rückhaltekraft. Erfindungsgemäß erfolgt dies dadurch, dass das Halteelement flexibel veränderbar an die vom Halteelement bedeckte Kontur des Fahrzeuginsassen ausgestaltet ist, welches hierzu zumindest eines der folgenden Elemente aufweist, wie Schaumstoff und/oder Naturfaser und/oder Textil, insbesondere in Verbindung mit einem Gelkissen und/oder mit einem aufblasbaren Blasenelement und/oder einem federgespannten Scharniermechanismus und /oder der Ausbildung einer Federplatte.

Die Reduzierung der Belastung des Insassen kann gemäß Anspruch 6 auch durch eine optimale Anpassung bzw. Begrenzung der Rückhaltekraft der Halteelemente an die individuelle Körperbeschaffenheit bzw. individuelle biomechanische Belastbarkeit des Insassen erfolgen. Vorteilhafterweise erfolgt dies mittels zumindest dreier Halteelemente an jeder Fahrzeugsitzseite, davon zwei Rückenhalteelemente und ein Beckenhalteelement, wobei deren maximale Rückhaltekräfte auf eine zuvor bestimmte, an den Fahrzeuginsassen individuell angepasste Belastbarkeit des Fahrzeuginsassen abgestimmt sind. Es ist damit eine separate Kraftbegrenzung pro Halteelement realisierbar, wodurch ein gut abgestimmtes System aus Gurt, Airbag und den Halteelemententen erstellt werden kann. Kern ist somit eine mehrteilige Seitenhaltanordnung, deren Kraftniveaus auf die biomechanische Belastbarkeit des Insassen abgestimmt sind. Es kann somit dem Becken des Insassen, das relativ große Kräfte verträgt (ca. 6 kN) mehr Rückhaltekraft zugesprochen werden als dem seitlichen Brustkorb, da dieser weniger robust auf die Eindrückung und auch den dynamischen Effekt einer schnellen, heftigen Eindrückung reagiert. Die Schulter wiederum, kann als robuster Haltepunkt nunmehr vorteilhafterweise verstärkt genutzt werden, wenn die Belastung der Wirbelsäule limitiert ist.

Weitere Vorteile und vorteilhafte Ausgestaltungen der Erfindung ergeben sich aus den Unteransprüchen und der Beschreibung.

Eine einfach zu realisierende und zuverlässige Haltevorrichtung ergibt sich gemäß Anspruch 2, wenn das Halteelement eine Prallplatte umfasst, wobei zwischen der Prallplatte des Halteelements und einer Außenhülle des Fahrzeugsitzes das Gelkissen und/oder nach Anspruch 3 das aufblasbare Blasenelement verbaut ist. Bei der Ausführung mit Gelkissen ergibt sich der Vorteil insbesondere bei zunehmender Dynamik, da das Gelkissen eine progressive Federkennlinie aufweist.

Eine einfach zu realisierende und zuverlässige Haltevorrichtung ergibt sich gemäß Anspruch 4, wenn das Halteelement eine Prallplatte umfasst, wobei der federgespannte Scharnier-Mechanismus eine an einem Drehpunkt drehbar gelagerte Scharnierplatte enthält, die sich über zumindest eine Feder an der Prallplatte federnd abstützt.

Eine einfach zu realisierende und zuverlässige Haltevorrichtung ergibt sich gemäß Anspruch 5, wenn das Halteelement eine Prallplatte aufweist, wobei zwischen der Prallplatte des Halteelements und der vorgesehenen Federplatte zumindest eine Feder verbaut ist, über die sich die Federplatte an der Prallplatte federnd abstützt.

Eine einfach zu realisierende und zuverlässige Haltevorrichtung gemäß Anspruch 7 bzw. ein einfach zu realiserendes Verfahren gemäß Anspruch 12 ergibt sich, wenn die Halteelemente als Klappen ausgeformte Prallplatten ausgebildet sind, die nach der Aktivierung zunächst einen maximalen Klappenwinkel αₘₐₓ einnehmen und anschließend unter einem definierten Kraftniveau einer aufgenommenen Crashkraft nachgeben und eine Stellung α kleiner als der maximale Klappenwinkel αₘₐₓ einnehmen.

Vorteilhaft ist es, gemäß Anspruch 8 bzw. gemäß Anspruch 13, wenn die Rückhaltekraft für jedes Halteelement bzw. eine separate Kraftbegrenzung pro Halteelement abhängig von einer Insassenerkennung und/oder einer Crashschwerevorhersage individuell festgelegt wird.

Vorteilhafterweise kann gemäß Anspruch 9 ein oberes Rückenhalteelement für den Schulterbereich und ein unteres Rückenhalteelement für den restlichen Rückenbereich bzw. Thoraxbereich vorgesehen sein, wobei die Rückhaltekraft für das Rückenhalteelement im Schulterbereich größer dimensionierbar ist als für das Beckenhalteelement und größer als für das Rückenhalteelement für den restlichen Rückenbereich bzw. Thoraxbereich.

Die Reduzierung der Belastung des Insassen kann auch durch eine Haltevorrichtung gemäß Anspruch 10, einer Kombination der Ausgestaltungen der konturanpassungsfähigen Halteelemente nach Anspruch 1 bis 5 in Verbindung mit der mehrteiligen Ausführung der Halteelemente nach Anspruch 6 bis 9, erfolgen. Damit lassen sich die Vorteile der unterschiedlichen Ausgestaltungen in optimaler Weise miteinander kombinieren, was zur einer weiteren Verbesserung führt.

### Zeichnung

Ausführungsbeispiele der Erfindung sind in der nachfolgenden Beschreibung näher erläutert und anhand der Zeichnung weiter verdeutlicht.

Es zeigen:
Fig. 1 in perspektivischer Darstellung einen Fahrzeugsitz mit den erfindungsgemäßen Halteelementen in ihrem Ruhezustand,
Fig. 2 einen Fahrzeugsitz mit Dummy,
Fig. 3a einen Schnitt des Dummys im Fahrzeugsitz in einem Ausgangszustand vor einer maximalen Verstellung der Halteelemente,
Fig. 3b einen Schnitt des Dummys mit dem Fahrzeugsitz bei ausgelösten Halteelementen,
Fig. 4a einem vergrößertem Ausschnitt des Halteelements aus Fig. 3a,
Fig. 4b eine schematisch vereinfachte Darstellung der Fig. 4a,
Fig. 5 ein Halteelement mit Scharnier-Mechanismus,
Fig. 6 ein Halteelement mit Federplatte,
Fig. 7 links dargestellt eine alternative Ausführung der Haltevorrichtung und rechts ein Diagramm der seitlich wirkenden Rückhaltekraft (Lateral Restraint Force) über die Zeit (time) dargestellt,
Fig. 8 eine schematische Darstellung des Angriffs von Kräften auf das Halteelement während des Ausfahrens des Halteelements zu verschiedenen Zeitpunkten eines Unfalls und
Fig. 9 schematisch vereinfacht einen Fahrzeugsitz mit symmetrisch angeordneten Halteelementen am Fahrzeugsitz.

### Ausführungsformen der Erfindung

Die Erfindung soll im Falle eines Unfalls eine verbesserte Schutzwirkung für die Insassen bieten und darüber hinaus die Schutzwirkung anderer Systeme, wie Airbags (Front-, Seiten-, Kopf- und Knieairbags), Gurtstraffer und Gurt verbessern. Der Insasse soll mittels seitlichen Halteelementen der erfindungsgemäßen Haltevorrichtung möglichst zentral und optimal ausgerichtet in die entsprechend aufgeblasenen Airbags fallen, wobei ein seitliches Abrutschen von den entsprechenden Airbags vermieden werden soll. Die Halteelemente sind in Form einer bewegbaren Fahrzeugsitz-Seitenwange in Fahrzeugsitzfläche und Lehne realisiert, die vor dem eigentlichen Aufprall des Fahrzeugs auf ein Fremdfahrzeug oder Hindernis ausgefahren werden, so dass der laterale Seitenhalt des Insassen im Fahrzeugsitz verbessert wird. Ebenso ist es möglich, die Halteelemente quasi separat in Form jeweils seitlich am Fahrzeugsitz befestigter oder in unmittelbarer Fahrzeugsitznähe an der Lehne und an der Fahrzeugsitzfläche seitlich verlaufender Halteflügel oder Halteklappen auszubilden, die entsprechend ausfahrbar oder ausklappbar gestaltet sind, um anliegend an dem Insassen, diesen seitlich im Fahrzeugsitz zu halten. Außerdem schützt die Haltevorrichtung auch vor Teilen, die im Crashfall zum Insassen dringen können.

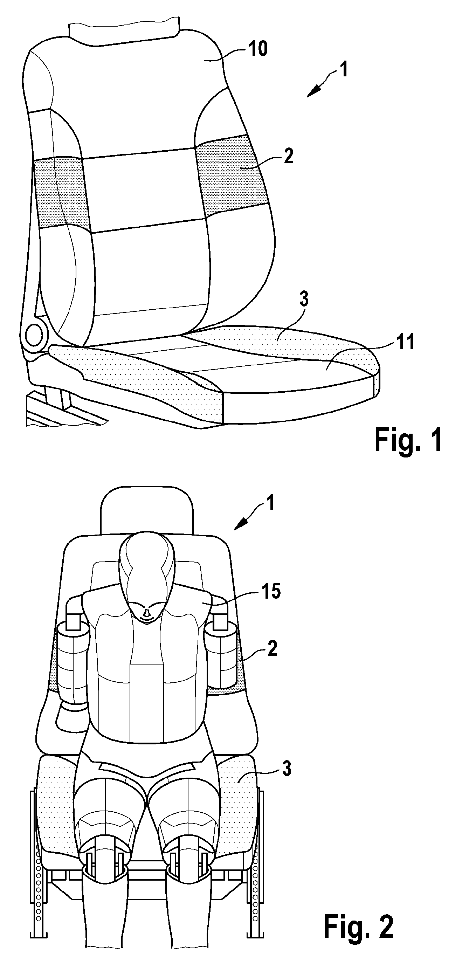

Die Fig. 1 zeigt einen Fahrzeugsitz 1 in perspektivischer Darstellung mit den erfindungsgemäßen Halteelementen der Haltevorrichtung, einem Halteelement 2 an der Rückenlehne 10, das im Folgenden Rückenhalteelement 2 bezeichnet wird und einem Halteelement 3 an der Fahrzeugsitzfläche 11, das im Folgenden Beckenhalteelement 3 bezeichnet wird. Das Rückenhalteelement 3 erstreckt sich einteilig entlang des Rückens des Insassen. Das Beckenhalteelement 3 erstreckt sich an der Fahrzeugsitzfläche 11 vom Rücken bis maximal an das vordere Fahrzeugsitzende hin.

Die Halteelemente 2, 3 sind Teil einer Haltevorrichtung, die auch als ESA = Enveloping Side Adjustment (einschließende Seiten-Anpassung) bezeichnet wird. Die Aktivierung der Haltevorrichtung erfolgt über eine Auswerteeinheit bzw. einem Steuergerät, das hierzu Signale von Sensoren auswertet und bei einer festgestellten Pre-Crashsituation entsprechend auslöst. Die Verstellung der Halteelemente der Haltevorrichtung 2, 3 erfolgt über Aktuatoren, welche beispielsweise auch zur Fahrzeugsitzverstellung vorgesehen sind. Als Aktuatoren sind grundsätzlich alle geeigneten Maschinenelemente einzeln oder in Kombination denkbar, wie ein Elektromotor mit Zahnstange/Kurvenscheibe, pneumatische Zylinder und/oder Blasen, Federelemente mit elektromagnetischer oder einem anderen Auslösemechanismus.

Gleiche und gleichwirkende Teile sind in den Figuren stets durch gleiche oder ähnliche Bezugszeichen gekennzeichnet.

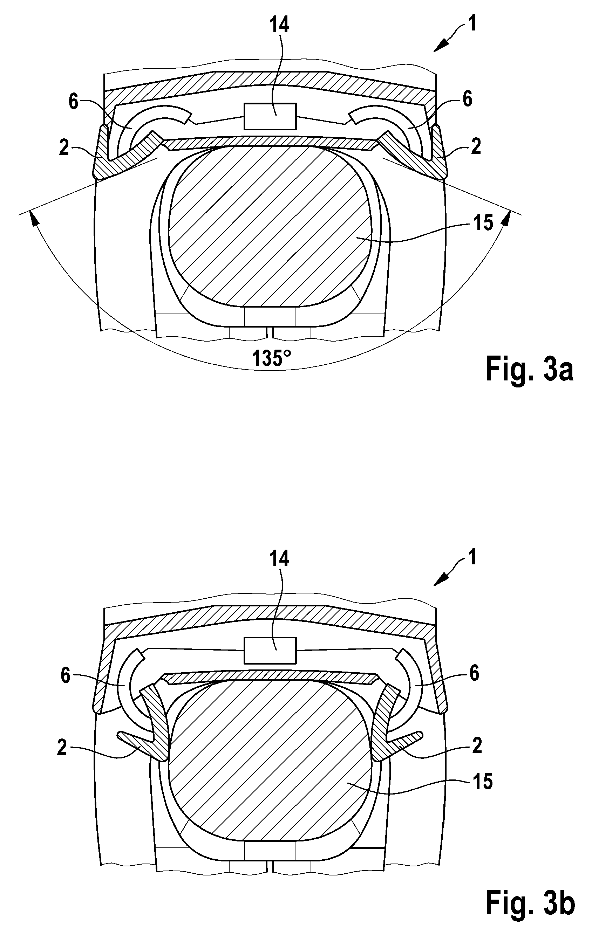

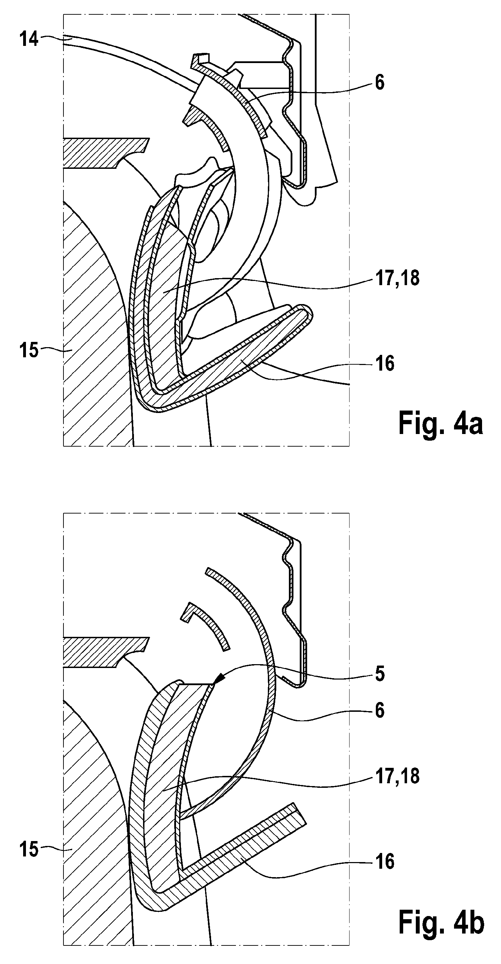

In der Fig. 2 ist ein Dummy 15 gezeigt, der auf dem erfindungsgemäßen Fahrzeugsitz 1 platziert ist. Die Fig. 3a zeigt einen Schnitt des Dummys 15 mit dem Fahrzeugsitz 1 im Ausgangszustand vor einer maximalen Verstellung der Halteelemente 2, 3 und die Fig. 3b einen entsprechenden Schnitt bei ausgelösten Halteelementen 2, 3 bzw. den beiden Rückenhalteelementen 2 in ihrer maximalen Verstellung. Die Halteelemente 2, 3 weisen als wesentliches Merkmal eine Prallplatte 5 auf, die in Fig. 4a, einem vergrößertem Ausschnitt aus Fig. 3a sowie gegenüberliegend in der Fig. 4b, einer schematisch vereinfachten Darstellung der Fig. 4a, näher dargestellt ist.

Wie die Fig. 4a, 4b näher zeigen, ist in einer ersten Ausführung die Prallplatte 5 mit einem beispielsweise kreisförmig abgebogenen Hebel 6 verbunden, der von einem in Fig. 3a, 3b schematisch angedeuteten Aktuator 14 betätigt wird. Der Hebel 6 kann sich in betätigtem Zustand seitlich rausdrehen, wobei die mit dem Hebel 6 verbundene Prallplatte 5 in Richtung des Insassen bzw. des Dummys 15 gefahren wird. Wie in Fig. 3a, 3b dargestellt ist, beträgt im Ruhezustand ein von den beiden Prallplatten 5 eingeschlossener Winkel beispielsweise 135 Grad, im ausgefahrenen Zustand verlaufen die Prallplatten 5 im Wesentlichen parallel zueinander bzw. in Längsrichtung.

Wie die Fig. 4a, 4b zeigen, ist zwischen einer Außenhülle 16 des Fahrzeugsitzes 1 und der Prallplatte 5 ein Gelkissen 17 verbaut. Das Gelkissen 17 bewirkt beim Andrücken an den Insassen, dass dessen vom Halteelement 2; 3 teilweise abgedeckte Kontur optimal vom nachgiebig wirkenden, an die Kontur bzw. Form des Insassen anpassungsfähigen Gelkissen 17 nachgebildet bzw. angepasst wird. Es entsteht dabei eine möglichst großflächige Anbindung des Halteelements 2; 3 an den Insassen, was vorteilhaft ist, da hierdurch eine Einleitung einer insgesamt größeren Rückhaltekraft über das Halteelement 2; 3, aufgebaut aus Gelkissen 17 und Prallplatte 5 und der Außenhülle 16, erfolgt. Bei der Außenhülle 16 kann es sich insbesondere um mit Fahrzeugsitzbezug überzogenen Schaumstoff und/oder Naturfaser und/oder anderen Textilen handeln. Denkbar ist auch, auf die Außenhülle 16 zu verzichten und mittels Gelkissen 17 direkt an den Insassen zu drücken.

Das Gelkissen 17 kann aber auch durch ein Blasenelement 18 ersetzt werden, welches beispielsweise pneumatisch aufblasbar gestaltet ist. Das Gelkissen 17 verhält sich bei langsamer Belastung wie eine pneumatische Blase 18. Der Kontakt von Gelkissen 17 oder Blasenelement 18 zur eindringenden Kontur ist großflächig. Es können enorm große Kräfte übertragen werden, ohne eine punktuelle Überlastung zu verursachen. Bei großer Geschwindigkeit der eindringenden Kontur steigt zudem die Federkraft aufgrund von dynamischen Vorgängen stark an. Es sind große Kräfte übertragbar, ohne dass der eindringende Körper des Insassen viel Weg zurücklegt. Diese dynamischen Eigenschaften von Gelkissen 17 sind für Haltevorrichtungen nach ESA vorteilhaft. In der relativ langsamen Precrash-Phase kann das Gelkissen 17 an die Kontur des Insassen angepasst werden. In der hochdynamischen Crash-Phase können große Rückhaltekräfte aufgebracht werden, ohne dass der Insasse dabei weit von seiner Position im Fahrzeugsitz 1 verbracht wird.

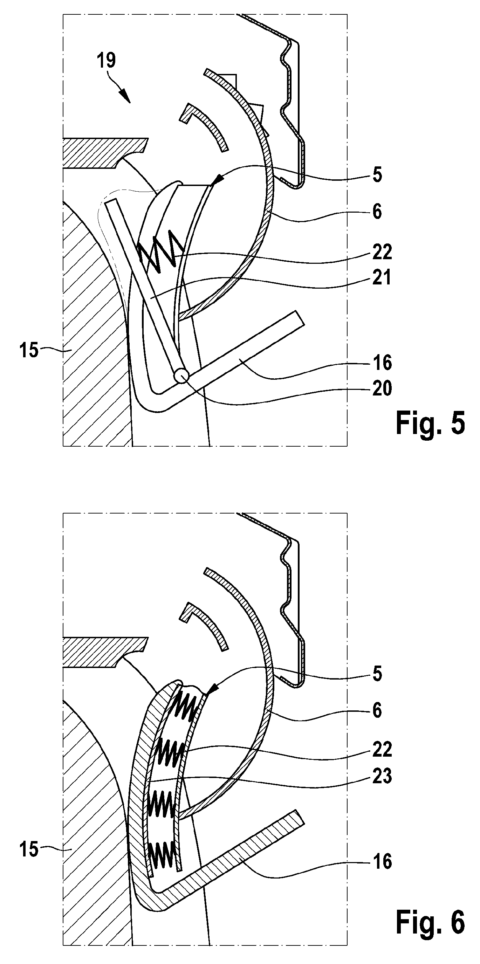

Anstelle des Gelkissens 17 oder der pneumatischen Blase 18 kann auch ein in Fig. 5 dargestellter Scharnier-Mechanismus 19 die anpassungsfähige Kontur des Halteelements 2; 3 bilden. Die Prallplatte 5 ist wie in Fig. 4b an einem ausfahrbaren Hebel 6 befestigt und bildet zugleich einen Drehpunkt 20 für eine an der Prallplatte 5 drehbar befestigte Scharnierplatte 21. Die Scharnierplatte 21 stützt sich über zumindest eine Feder 22 an der Prallplatte 5 ab. Die Scharnierplatte 21 kann von der Außenhülle 16 des Fahrzeugsitzes 1 bedeckt sein.

Eine weitere Möglichkeit eine anpassungsfähige Kontur der Halteelemente 2; 3 zu bewerkstelligen, ist in Fig. 6 gezeigt. Die Prallplatte 5 ist wie in Fig. 4b an einem ausfahrbaren Hebel 6 befestigt. Zwischen der Prallplatte 5 und einer vorgesehenen Federplatte 23 ist zumindest eine Feder 22 verbaut. Vorteilhafterweise sind mehrere Federn 22 vorgesehen, um durch einen Sandwichaufbau eine gute, federnde Abstüzung der Federplatte 23 an der Prallplatte 5 zu erhalten. Bei der Federplatte 23 entfällt der feste Drehpunkt des Scharniers und die Federplatte 23 wird von einer oder mehreren Federn 22 abgestützt und in Position gehalten. Die Federkennlinie beider Lösungen nach Fig. 5 und 6 ist weitestgehend konstant, so dass im Crashfall etwas größere Bewegungen des Insassen zuzulassen sind. Gegenüber dem Gelkissen 17 hat der Scharnier-Mechanismus 20, 21, 22 und die Federplatte 23 einen Gewichtsvorteil.

Selbstverständlich ist es möglich, die konturanpassungsfähigen Mittel bzw. Elemente für die Halteelemente 2; 3, wie die Außenhülle 16 aufweisenden Schaumstoff und/oder Naturfaser und/oder Textil, mit der Ausführung des Gelkissens 17, des aufblasbaren Blasenelements 18, des federgespannten Scharnier-Mechanismus 19 und der Federplatte 23 miteinander zu kombinieren.

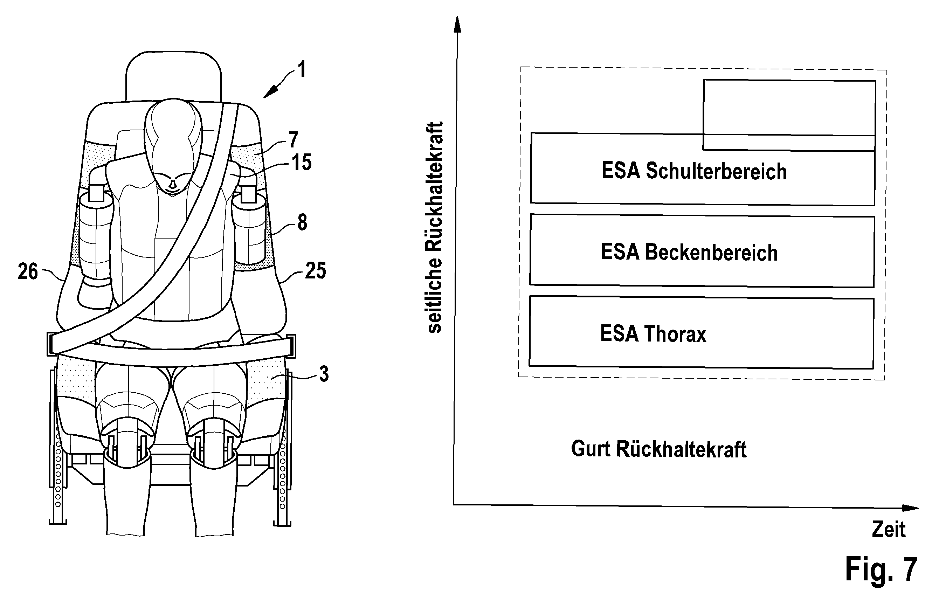

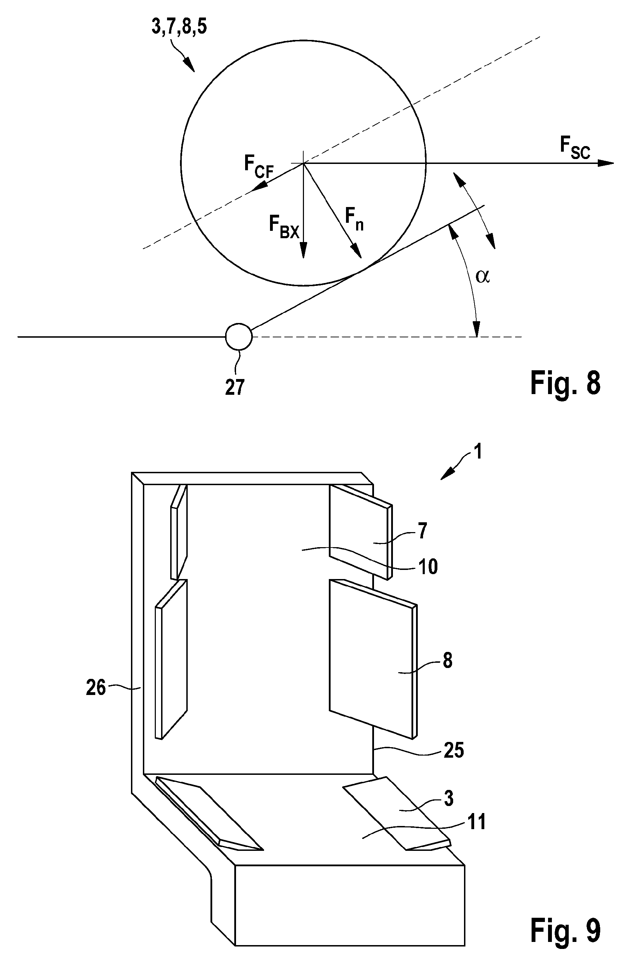

Die Fig. 7 zeigt links dargestellt eine weitere Ausführung der Haltevorrichtung, die als ESA-System Rückhaltekräfte bei einem Seitenaufprall bewirkt, welche exakt an die vom Insassen aufnehmbare, biomechanische Belastbarkeit angepasst sind. Damit ist es möglich, über abgestimmte Kraftniveaus der Halteelemente die Belastung für den Insassen möglichst gering zu halten. So sind zumindest drei Halteelemente 3, 7, 8 an jeder Fahrzeugsitzseite 25, 26, davon im Folgenden mit den Bezugszeichen 7 und 8 gekennzeichnete, zwei Rückenhalteelemente 7, 8 und ein Beckenhalteelement 3 vorgesehen, deren maximale Rückhaltekräfte auf eine zuvor bestimmte, an den Fahrzeuginsassen individuell angepasste Belastbarkeit des Fahrzeuginsassen abgestimmt sind. Als Halteelemente dienen, wie dargestellt, ausfahrbare Seitenwangen des Fahrzeugsitzes 1 oder, wie in Fig. 9 dargestellt, am Fahrzeugsitz 1 beidseitig seitlich ausfahrbar oder ausklappbar gestaltete Halteflügel bzw. Halteklappen. 3, 7, 8.

Rechts in Fig. 7 ist gegenüber dem Fahrzeugsitz 1 ein Diagramm über die seitlich wirkende Rückhaltekraft (Lateral Restraint Force) über die Zeit (Time) dargestellt. Wie dem Diagramm entnehmbar, ist die Rückhaltekraft des Gurts (Belt) am geringsten. Es folgt dann aufsteigend die erzielbare Rückhaltekraft mittels der Halteelemente, der Thoraxbereich, der Beckenbereich (Pelvis) und dann der Schulterbereich (Shoulder) und am höchsten ist die erzielbare Rückhaltekraft mittels Airbag. Durch die Aufteilung der Halteelemente in drei Halteelemente, davon zwei Rückenhalteelemente 7, 8 im Rückenbereich und ein Beckenhalteelement 3 in oder an der Fahrzeugsitzfläche 11, kann nun den verschiedenen, maximal zulässigen Rückhaltekräften des Insassen entsprechend Rechnung getragen werden. So kann der Schutzbereich mit dem oberen Rückenhalteelement 7 (Schulterbereich) am höchsten und der Thoraxbereich mit dem unteren Rückenhalteelement 8 am geringsten belastet werden. Dazwischen kann über das Beckenhalteelement 3 eine mittlere Rückhaltekraft eingestellt werden. Die Halteelemente 3, 7, 8 an jeder Fahrzeugsitzseite 25, 26, einmal an der der B-Säule des Fahrzeugs zugewandten Seite und an der dem Fahrzeuginneren zugewandten Seite, können auch als Klappen ausgeformte Prallplatten ausgebildet sein, die sich aus der Rückenlehne 10 bzw. der Sitzfläche 11 ausprägen. Nach der Aktivierung der Klappen 3, 7, 8 nehmen diese zunächst einen maximalen Klappenwinkel αₘₐₓ ein und geben anschließend unter einem definierten Kraftniveau einer aufgenommenen Crashkraft F_{SC} bzw. einer maximal vorgesehenen Rückhaltekraft nach und stellen sich zurück in eine Stellung α kleiner dem maximalen Klappenwinkel αₘₐₓ. Eine besondere Rolle spielt dabei der relativ groß dimensionierbare Schulterhalt, der die Insassenkinematik im Seitencrash sehr positiv beeinflusst, welcher über das obere Rückenhalteelement 7 bewerkstelligt werden kann.

Selbstverständlich ist es möglich, zusätzlich zur Aufteilung der Halteelemente in die drei Halteelemente 3, 7, 8, diese, wie in den Fig. 1 bis 6 beschrieben, mit konturanpassungsfähigen Mitteln 16, 17, 18, 19, 23 auszustatten.

Die Fig. 8 zeigt eine schematische Darstellung des Angriffs von Kräften auf das Halteelement 3, 7, 8 während des Ausfahrens des Halteelements 3; 7; 8 zu verschiedenen Zeitpunkten eines Unfalls. Die Halteelemente 3; 7; 8 sind beispielsweise als Klappen ausgeführt. Als vorteilhaft im Zusammenwirken der Halteelemente 3, 7, 8 mit einem Gurt hat sich ein (crashfester) Winkel α zwischen dem Halteelement 3; 7; 8 bzw. der zugehörigen Prallplatte 5 und Rückenlehne 10 bzw. Fahrzeugsitzfläche 11 von größer als 45 Grad herausgestellt. Ein Drehpunkt der Halteelemente 3, 7, 8 bzw. der zugehörigen Prallplatten 5 ist mit 27 gekennzeichnet. Wie die Fig. 8 zeigt, ist erkennbar, dass bei einer Kraft F_{SC} durch einen Seitenaufprall, eine Normalkraft F_{N} und eine Kraft F_{BX} eines Gurtes in x-Richtung und eine Reibungskraft F_{CF} (CF=Coulomb-Friction = Coulomb-Reibung; F_{CF} = µ_{C}F_{N}; µ_{C} = Reibungskoeffizient von Textil zu Textil oder von Textil zu Leder) entsteht, die ein Heraufrutschen des Insassen an der Seitenwangenkontur verhindert. Einen Einfluss hat auch die Netto-Masse m des Insassen (ohne Krafteinleitung via Beine und Rücken).

Die Fig. 9 zeigt ein dreiteilig ausgeführtes ESA-System, bei dem beidseitig am Fahrzeugsitz 1 befestigt, Halteflügel bzw. Halteklappen 3, 7, 8 vorgesehen sind. Die Anordnung der Haltevorrichtungen 3, 7, 8 erfolgt symmetrisch, was zu einer optimalen Ausrichtung des Insassen bei einer Aktivierung in der Precrash-Phase führt.

Bei der Festlegung der von den Halteelementen 3, 7, 8 auf den Insassen aufgebrachten Rückhaltekräfte ist prinzipiell eine hohe laterale Haltekraft gut, da sie den Insassen aus der Intrusionszone des Crashs hält. Der Seitenhalt sollte genau ausbalanciert und an sich jedoch nicht Ursache von schweren Verletzungen sein. Zur Erzielung eines maximalen Nutzens, ist eine Ansteuerung in Abhängigkeit von der Belegungssituation und einer vorhergesagten Crashsituation vorteilhaft. So kann die Ansteuerung der Halteelemente 3, 7, 8 einerseits abhängig von individuellen Insassenparametern, wie dem Körperbau, dem Geschlecht, dem Alter, dem Körpergewicht etc., erfolgen und andererseits von der vorhergesagten Crashschwere, wie niedrige, mittlere oder hohe Crashschwere. Die Crashschwerevorhersage erfolgt in bekannter Weise über Daten von Sensoren, die einer Auswerteeinrichtung, insbesondere Steuergerät, zur Auswertung zugeführt werden. Zur Begrenzung der Haltekräfte können mechanische Lösungen für die Halteelemente 3, 7, 8 vorgesehen werden, wie beispielsweise entsprechende angebrachte Deformationselemente oder dergleichen.

**Folgende Tabelle zeigt mögliche Abhängigkeiten:**

| Insasse | Niedrige Crashschwere | Mittlere Crashschwere | Hohe Crashschwere |
|---|---|---|---|
| Wenig belastbar | Niedrige Haltekraft | Niedrigemittlere Haltekraft | Mittlere Haltekraft |
| Mittlere Belastbarkeit | Niedrige - mittlere Haltekraft | Mittlere Haltekraft | Mittlere-hohe Haltekraft |
| Hohe Belastbarkeit | Mittlere Haltekraft | Mittlere-hohe Haltekraft | Hohe Haltekraft |

Ein Verfahren zum Betätigen der Haltevorrichtung besteht somit darin, die Halteelemente 3, 7, 8, im Precrashfall zu aktivieren, welche anschließend seitlich am oder im Fahrzeugsitz 1 ausfahren und teilweise anliegend an dem Fahrzeuginsassen bei einem Unfall einen seitlichen Halt des Fahrzeuginsassen im Fahrzeugsitz 1 bewerkstelligen. Es sind zumindest drei Halteelemente 3, 7, 8 an jeder Fahrzeugsitzseite 25, 26 vorzusehen, davon zwei Rückenhalteelemente 7, 8 und ein Beckenhalteelement 3, deren maximale Rückhaltekräfte auf eine zuvor bestimmte, an den Fahrzeuginsassen individuell angepasste Belastbarkeit des Fahrzeuginsassen abgestimmt werden. Die Halteelemente 3, 7, 8 können als Klappen ausgeformte Prallplatten 5 ausgebildet sein, die nach der Aktivierung zunächst einen maximalen Klappenwinkel αₘₐₓ einnehmen und anschließend unter einem definierten Kraftniveau einer aufgenommenen Crashkraft bzw. maximalen Rückhaltekraft nachgeben, wonach eine Stellung α kleiner als der maximale Klappenwinkel αₘₐₓ eingenommen wird. Vorteilhaft ist es dabei, die Rückhaltekraft für jedes Halteelement 3, 7, 8 bzw. eine separate Kraftbegrenzung pro Halteelement 3, 7, 8 abhängig von einer Insassenerkennung und/oder einer Crashschwerevorhersage fahrzeuginsassenindividuell festzulegen. Die Insassenerkennung kann beispielsweise über Sensoren für Körperbau, Sitzbelegungserkennung, Körpergewicht und über separate Eingabe an das Steuergerät usw. erfolgen.

Die Reduzierung der Belastung des Insassen kann auch durch eine Haltevorrichtung gemäß Anspruch 10, einer Kombination der Ausgestaltungen der konturanpassungsfähigen Halteelemente nach Anspruch 1 bis 5 in Verbindung mit der mehrteiligen Ausführung der Halteelemente nach Anspruch 6 bis 9, erfolgen. Damit lassen sich die Vorteile der unterschiedlichen Ausgestaltungen in optimaler Weise miteinander kombinieren, was zur einer weiteren Verbesserung führt.

Die erfindungsgemäße Haltevorrichtung ist für Fahrzeuginsassen in einem Fahrzeugsitz eines Fahrzeugs, insbesondere in Kombination bzw. in Zusammenwirken weiterer Rückhaltemittel, wie Airbags, Gurt und Gurtstraffer, vorgesehen.

## Patentansprüche

1. Haltevorrichtung zum Halten eines Fahrzeuginsassen in einem Fahrzeugsitz, mit zumindest einem Halteelement, das im Precrashfall aktiviert, seitlich am oder im Fahrzeugsitz ausfährt und teilweise anliegend an dem Fahrzeuginsassen bei einem Unfall einen seitlichen Halt des Fahrzeuginsassen im Fahrzeugsitz bewerkstelligt, wobei zumindest drei Halteelemente (3, 7, 8) an jeder Fahrzeugsitzseite (25, 26), davon zwei Rückenhalteelemente (7, 8) und ein Beckenhalteelement (3) vorgesehen sind **dadurch gekennzeichnet, dass** maximale Rückhaltekräfte der Halteelemente (3, 7, 8) auf eine zuvor bestimmte, an den Fahrzeuginsassen individuell angepasste Belastbarkeit des Fahrzeuginsassen abgestimmt sind.

2. Haltevorrichtung nach Anspruch 1, **dadurch gekennzeichnet, dass** die Halteelemente (3, 7, 8) als Klappen ausgeformte Prallplatten (5) ausgebildet sind, die nach der Aktivierung zunächst einen maximalen Klappenwinkel αₘₐₓ einnehmen und anschließend unter einem definierten Kraftniveau einer aufgenommenen Crashkraft nachgeben und eine Stellung α kleiner als der maximale Klappenwinkel αₘₐₓ einnehmen.

3. Haltevorrichtung nach Anspruch oder 2, **dadurch gekennzeichnet, dass** die Rückhaltekraft für jedes Halteelement (3, 7, 8) bzw. eine separate Kraftbegrenzung pro Halteelement (3, 7, 8) abhängig von einer Insassenerkennung und/oder einer Crashschwerevorhersage individuell festgelegt ist.

4. Haltevorrichtung nach Anspruch 1, 2 oder 3, **dadurch gekennzeichnet, dass** ein oberes Rückenhalteelement (7) für den Schulterbereich und ein unteres (8) Rückenhalteelement für den restlichen Rückenbereich bzw. Thoraxbereich vorgesehen sind, wobei die Rückhaltekraft für das Rückenhalteelement (7) im Schulterbereich größer dimensionierbar ist als für das Beckenhalteelement (3) und größer als für das Rückenhalteelement (8) für den restlichen Rückenbereich bzw. Thoraxbereich.

5. Haltevorrichtung nach einem der Anspüche 1 bis 4, **dadurch gekennzeichnet, dass** die Haltevorrichtung das Halteelement, das im Precrashfall aktiviert, seitlich am oder im Fahrzeugsitz ausfährt und teilweise anliegend an dem Fahrzeuginsassen bei einem Unfall einen zusätzlichen seitlichen Halt des Fahrzeuginsassen im Fahrzeugsitz bewerkstelligt, wobei das Halteelement (2, 3) flexibel veränderbar an die vom Halteelement (2, 3) bedeckte Kontur des Fahrzeuginsassen ausgestaltet ist.

6. Haltevorrichtung nach einem der Anspürche 1 bis 5, **dadurch gekennzeichnet, dass** das Halteelement zumindest eines der folgenden Elemente aufweist:
- Schaumstoff (16) und/oder Naturfaser und/oder Textil,
- Gelkissen (17),
- aufblasbares Blasenelement (18),
- federgespannten Scharnier-Mechanismus (19),
- Federplatte (23).

7. Haltevorrichtung nach einem der Ansprüche 1 bis 6, **dadurch gekennzeichnet, dass** das Halteelement (2, 3) eine Prallplatte (5) umfasst, wobei zwischen der Prallplatte (5) des Halteelements (2, 3) und einer Außenhülle (16) des Fahrzeugsitzes (1) ein Gelkissen (17) verbaut ist.

8. Haltevorrichtung nach einem der Ansprüche 1 bis 7, **dadurch gekennzeichnet, dass** das Halteelement (2, 3) eine Prallplatte (5) umfasst, wobei zwischen der Prallplatte (5) des Halteelements (2, 3) und einer Außenhülle (16) des Fahrzeugsitzes (1) ein aufblasbares Blasenelement (18) verbaut ist.

9. Haltevorrichtung nach einem der Ansprüche 1 bis 8, **dadurch gekennzeichnet, dass** das Halteelement (2, 3) eine Prallplatte (5) umfasst, wobei der federgespannte Scharnier-Mechanismus (19) eine an einem Drehpunkt (20) drehbar gelagerte Scharnierplatte (21) enthält, die sich über zumindest eine Feder (22) an der Prallplatte (5) federnd abstützt.

10. Haltevorrichtung nach einem der Ansprüche 1 bis 9, **dadurch gekennzeichnet, dass** das Halteelement (2, 3) eine Prallplatte (5) aufweist, wobei zwischen der Prallplatte (5) des Halteelements (2, 3) und der vorgesehenen Federplatte (23) zumindest eine Feder (22) verbaut ist, über die sich die Federplatte (23) an der Prallplatte (5) federnd abstützt.

11. Verfahren zum Betätigen einer Haltevorrichtung zum Halten eines Fahrzeuginsassen in einem Fahrzeugsitz, mit zumindest einem Halteelement, das im Precrashfall aktiviert wird, welches anschließend seitlich am oder im Fahrzeugsitz ausfährt und teilweise anliegend an dem Fahrzeuginsassen bei einem Unfall einen seitlichen Halt des Fahrzeuginsassen im Fahrzeugsitz bewerkstelligt, wobei zumindest drei Halteelemente (3, 7, 8) an jeder Fahrzeugsitzseite (25, 26), davon zwei Rückenhalteelemente (7, 8) und ein Beckenhalteelement (3) vorgesehen sind, **dadurch gekennzeichnet, dass** maximale Rückhaltekräfte der Halteelemente (3, 7, 8) auf eine zuvor bestimmte, an den Fahrzeuginsassen individuell angepasste Belastbarkeit des Fahrzeuginsassen abgestimmt werden.

12. Verfahren nach Anspruch 11, **dadurch gekennzeichnet, dass** die Halteelemente (3, 7, 8) als Klappen ausgeformte Prallplatten (5) ausgebildet sind, die nach der Aktivierung zunächst einen maximalen Klappenwinkel αₘₐₓ einnehmen und anschließend unter einem definierten Kraftniveau einer aufgenommenen Crashkraft nachgeben, wonach eine Stellung α kleiner als der maximale Klappenwinkel αₘₐₓ eingenommen wird.

13. Verfahren nach Anspruch 11 oder 12, **dadurch gekennzeichnet, dass** die Rückhaltekraft für jedes Halteelement (3, 7, 8) bzw. eine separate Kraftbegrenzung pro Halteelement (3, 7, 8) abhängig von einer Insassenerkennung und/oder einer Crashschwerevorhersage individuell festgelegt wird.

## Claims

1. Retaining device for retaining a vehicle occupant in a vehicle seat, with at least one retaining element which activates in the pre-crash situation, extends laterally on or in the vehicle seat and, partially lying against the vehicle occupant in the event of an accident, brings about a lateral support of the vehicle occupant in the vehicle seat, wherein at least three retaining elements (3, 7, 8), of which two are back-retaining elements (7, 8) and one is a pelvis-retaining element (3), are provided on each vehicle seat side (25, 26), **characterized in that** maximum restraint forces of the retaining elements (3, 7, 8) are coordinated with a previously determined vehicle-occupant loading capacity that is individually matched to the vehicle occupants.

2. Retaining device according to Claim 1, **characterized in that** the retaining elements (3, 7, 8) are designed as flap-shaped impact plates (5) which, after activation, initially adopt a maximum flap angle αₘₐₓ and subsequently yield under a defined force level of an absorbed crash force and adopt a position α of less than the maximum flap angle αₘₐₓ.

3. Retaining device according to Claim or 2, **characterized in that** the restraint force for each retaining element (3, 7, 8) or a separate force limitation per retaining element (3, 7, 8) is established individually depending on recognition of an occupant and/or a prediction of the crash severity.

4. Retaining device according to Claim 1, 2 or 3, **characterized in that** an upper back-retaining element (7) is provided for the shoulder region and a lower back-retaining element (8) is provided for the rest of the back region or thorax region, wherein the restraint force for the back-retaining element (7) in the shoulder region can be of greater dimensions than for the pelvis-retaining element (3) and greater than for the back-retaining element (8) for the rest of the back region or thorax region.

5. Retaining device according to one of Claims 1 to 4, **characterized in that** the retaining device laterally extends the retaining element, which activates in the pre-crash situation, on or in the vehicle seat and, partially lying against the vehicle occupant in the event of an accident, brings about an additional lateral support of the vehicle occupant in the vehicle seat, wherein the retaining element (2, 3) is configured to be flexibly changeable to that contour of the vehicle occupant which is covered by the retaining element (2, 3).

6. Retaining device according to one of Claims 1 to 5, **characterized in that** the retaining element has at least one of the following elements:
- foam (16) and/or natural fibre and/or textile,
- gel cushion (17),
- inflatable bubble element (18),
- spring-tensioned hinge mechanism (19),
- spring plate (23).

7. Retaining device according to one of Claims 1 to 6, **characterized in that** the retaining element (2, 3) comprises an impact plate (5), wherein a gel cushion (17) is installed between the impact plate (5) of the retaining element (2, 3) and an outer covering (16) of the vehicle seat (1).

8. Retaining device according to one of Claims 1 to 7, **characterized in that** the retaining element (2, 3) comprises an impact plate (5), wherein an inflatable bubble element (18) is installed between the impact plate (5) of the retaining element (2, 3) and an outer covering (16) of the vehicle seat (1).

9. Retaining device according to one of Claims 1 to 8, **characterized in that** the retaining element (2, 3) comprises an impact plate (5), wherein the spring-tensioned hinge mechanism (19) contains a hinge plate (21) which is mounted rotatably at a pivot point (20) and is resiliently supported on the impact plate (5) via at least one spring (22).

10. Retaining device according to one of Claims 1 to 9, **characterized in that** the retaining element (2, 3) has an impact plate (5), wherein at least one spring (22) is installed between the impact plate (5) of the retaining element (2, 3) and the provided spring plate (23), via which spring the spring plate (23) is resiliently supported on the impact plate (5).

11. Method for actuating a retaining device for retaining a vehicle occupant in a vehicle seat, with at least one retaining element which is activated in the pre-crash situation and which subsequently extends laterally on or in the vehicle seat and, partially lying against the vehicle occupant in the event of an accident, brings about a lateral support of the vehicle occupant in the vehicle seat, wherein at least three retaining elements (3, 7, 8), of which two are back-retaining elements (7, 8) and one is a pelvis-retaining element (3), are provided on each vehicle seat side (25, 26), **characterized in that** maximum restraint forces of the retaining elements (3, 7, 8) are coordinated to a previously determined vehicle-occupant loading capacity that is matched individually to the vehicle occupant.

12. Method according to Claim 11, **characterized in that** the retaining elements (3, 7, 8) are designed as flap-shaped impact plates (5) which, after activation, first of all adopt a maximum flap angle αₘₐₓ and subsequently yield under a defined force level of an absorbed crash force, after which a position α of less than the maximum flap angle αₘₐₓ is adopted.

13. Method according to Claim 11 or 12, **characterized in that** the restraint force for each retaining element (3, 7, 8) or a separate force limitation per retaining element (3, 7, 8) is established individually depending on recognition of an occupant and/or prediction of a severity of a crash.

## Revendications

1. Dispositif de retenue pour retenir un occupant d'un véhicule dans un siège de véhicule, comprenant au moins un élément de retenue qui est activé en cas de pré-collision, sort latéralement sur ou dans le siège de véhicule et assure un maintien latéral de l'occupant du véhicule dans le siège de véhicule en s'appliquant en partie contre l'occupant du véhicule en cas d'accident, au moins trois éléments de retenue (3, 7, 8) étant prévus au niveau de chaque côté du siège de véhicule (25, 26), dont deux éléments de retenue du dos (7, 8) et un élément de retenue du bassin (3), **caractérisé en ce que** des forces de retenue maximales des éléments de retenue (3, 7, 8) sont adaptées à une résistance de l'occupant du véhicule adaptée individuellement à l'occupant du véhicule, déterminée préalablement.

2. Dispositif de retenue selon la revendication 1, **caractérisé en ce que** les éléments de retenue (3, 7, 8) sont réalisés sous forme de plaques de collision (5) formées en tant que volets qui, après l'activation, adoptent d'abord un angle de volet maximum αₘₐₓ et cèdent ensuite sous l'effet d'un niveau de force défini d'une force de collision reçue et adoptent une position α inférieure à l'angle de volet maximum αₘₐₓ.

3. Dispositif de retenue selon la revendication ou 2, **caractérisé en ce que** la force de retenue pour chaque élément de retenue (3, 7, 8) ou une limitation de force séparée pour chaque élément de retenue (3, 7, 8) sont fixées individuellement en fonction d'une connaissance de l'occupant et/ou d'une prévision de la sévérité de la collision.

4. Dispositif de retenue selon la revendication 1, 2 ou 3, **caractérisé en ce qu'**un élément de retenue du dos supérieur (7) pour la région des épaules et un élément de retenue du dos inférieur (8) pour le reste de la région du dos ou pour la région du thorax sont prévus, la force de retenue pour l'élément de retenue du dos (7) dans la région des épaules pouvant être dimensionnée de manière être supérieure à la force de retenue pour l'élément de retenue pour le bassin (3) et supérieure à la force de retenue pour l'élément de retenue du dos (8) pour le reste de la région du dos ou pour la région du thorax.

5. Dispositif de retenue selon l'une quelconque des revendications 1 à 4, **caractérisé en ce que** le dispositif de retenue fait sortir l'élément de retenue, qui s'active en cas de pré-collision, latéralement sur ou dans le siège de véhicule et fournit un maintien latéral supplémentaire de l'occupant du véhicule dans le siège de véhicule en s'appuyant partiellement contre l'occupant du véhicule dans le cas d'un accident, l'élément de retenue (2, 3) étant configuré de manière à pouvoir être modifié de manière adaptable au contour de l'occupant du véhicule couvert par l'élément de retenue (2, 3).

6. Dispositif de retenue selon l'une quelconque des revendications 1 à 5, **caractérisé en ce que** l'élément de retenue présente au moins l'un des éléments suivants :
- de la mousse (16) et/ou des fibres naturelles et/ou un textile,
- un coussin de gel (17),
- un élément à alvéole gonflable (18),
- un mécanisme de charnière précontraint par ressort (19),
- une plaque à ressort (23).

7. Dispositif de retenue selon l'une quelconque des revendications 1 à 6, **caractérisé en ce que** l'élément de retenue (2, 3) comprend une plaque de collision (5), un coussin de gel (17) étant monté entre la plaque de collision (5) de l'élément de retenue (2, 3) et une enveloppe extérieure (16) du siège de véhicule (1).

8. Dispositif de retenue selon l'une quelconque des revendications 1 à 7, **caractérisé en ce que** l'élément de retenue (2, 3) comprend une plaque de collision (5), un élément à alvéole gonflable (18) étant monté entre la plaque de collision (5) de l'élément de retenue (2, 3) et une enveloppe extérieure (16) du siège de véhicule (1).

9. Dispositif de retenue selon l'une quelconque des revendications 1 à 8, **caractérisé en ce que** l'élément de retenue (2, 3) comprend une plaque de collision (5), le mécanisme de charnière précontraint par ressort (19) contenant une plaque de charnière (21) supportée à rotation au niveau d'un point de pivot (20), laquelle s'appuie de manière élastique par le biais d'au moins un ressort (22) contre la plaque de collision (5).

10. Dispositif de retenue selon l'une quelconque des revendications 1 à 9, **caractérisé en ce que** l'élément de retenue (2, 3) présente une plaque de collision (5), au moins un ressort (22) étant monté entre la plaque de collision (5) de l'élément de retenue (2, 3) et la plaque à ressort prévue (23), par le biais duquel la plaque à ressort (23) s'appuie élastiquement contre la plaque de collision (5).

11. Procédé pour l'actionnement d'un dispositif de retenue pour retenir un occupant d'un véhicule dans un siège de véhicule, comprenant au moins un élément de retenue qui est activé en cas de pré-collision, qui se déplace ensuite latéralement sur ou dans le siège de véhicule et fournit un maintien latéral de l'occupant du véhicule dans le siège de véhicule, en s'appliquant partiellement contre l'occupant du véhicule dans le cas d'un accident, au moins trois éléments de retenue (3, 7, 8) étant prévus au niveau de chaque côté de siège de véhicule (25, 26), dont deux éléments de retenue pour le dos (7, 8) et un élément de retenue pour le bassin (3), **caractérisé en ce que** des forces de retenue maximales des éléments de retenue (3, 7, 8) sont adaptées à une résistance de l'occupant de véhicule adaptée individuellement à l'occupant du véhicule, déterminée préalablement.

12. Procédé selon la revendication 11, **caractérisé en ce que** les éléments de retenue (3, 7, 8) sont réalisés sous forme de plaques de collision (5) formées en tant que volets, qui, après activation, adoptent d'abord un angle de volet maximal αₘₐₓ et cèdent ensuite sous l'effet d'un niveau de force défini d'une force de collision reçue et adoptent ensuite une position α inférieure à l'angle de volet maximum αₘₐₓ.

13. Procédé selon la revendication 11 ou 12, **caractérisé en ce que** la force de retenue pour chaque élément de retenue (3, 7, 8) ou une limitation de force séparée pour chaque élément de retenue (3, 7, 8) est fixée individuellement en fonction d'une connaissance d'un occupant et/ou d'une prévision de la sévérité d'une collision.
